# EUROPÄISCHE PATENTSCHRIFT

(11) **EP 2 011 382 B1**
(45) Veröffentlichungstag und Bekanntmachung des Hinweises auf die Patenterteilung: **14.11.2012**
(21) Anmeldenummer: 08011965.4
(22) Anmeldetag: 02.07.2008
(51) Int. Cl.: A01C 7/12

(54) **Sämaschine**
Sowing machine
Machine à semer

(30) Priorität: 03.07.2007 DE 202007009302 U
(43) Veröffentlichungstag der Anmeldung: 07.01.2009
(73) Patentinhaber: Alois Pöttinger Maschinenfabrik Ges.m.b.H., 4710 Grieskirchen (AT)
(72) Erfinder: Rusch, Uwe, 06408 Baalberge (DE)
(74) Vertreter: Thoma, Michael

(56) Entgegenhaltungen:
- EP-A- 1 430 762
- DE-A1- 10 028 967
- US-A- 4 500 017
- US-B1- 6 651 570

## Beschreibung

Die vorliegende Erfindung betrifft eine Sämaschine zum Ausbringen von Saatgut, Dünger etc., mit einem Aufgabebehältnis, einer Ausbringvorrichtung sowie einer zwischen dem Aufgabebehältnis und der Ausbringvorrichtung vorgesehenen Dosiervorrichtung, die mehrere nebeneinander angeordnete Dosierräder aufweist, die aus dem Aufgabebehältnis mit dem Saatgut, Dünger etc. beschickbar sind, wobei die Dosierräder umfangsseitig bereichsweise von zumindest einer Bodenklappe umgeben sind, die zumindest zwei nebeneinander angeordneten Dosierrädern zugeordnet ist.

Bei Universal- oder Mehrzwecksämaschinen, die für das Ausbringen verschiedener Saatgut- bzw. Düngertypen geeignet sind, insbesondere verschiedene Saatkorngrößen ausbringen können, ist es zur Erreichung einer präzisen Dosierung erforderlich, für die verschiedenen Saatguttypen und Körnergrößen unterschiedliche Dosierräder zu verwenden, die an die jeweilige Körnergröße angepasst sind. Die Dosierräder sind dabei regelmäßig auf einer Dosiererwelle angeordnet, die sich stromab des Auslaufs des Aufgabebehältnisses erstreckt und das aus dem Auslauf des Aufgabebehältnisses ablaufende Gut in die Ausbringvorrichtung dosiert, mit Hilfe derer das Saatgut auf dem bzw. in dem Boden abgelegt wird. Herkömmlicherweise sind deshalb die Dosierräder auswechselbar, wobei es bekannt ist, gleich die gesamte Dosiererwelle mitsamt den darauf befestigten Dosierrädern auszutauschen, vgl. EP 1 570 716 A2 oder DE 10 2004 010 730 A1.

Um den bisweilen durchaus zeitaufwendigen Austausch der Dosierräder zu vermeiden, wurde bereits vorgeschlagen, mehrere unterschiedliche Dosierräder alternierend nebeneinander auf der Dosiererwelle anzuordnen und über separate Aufgabekanäle mit Saatgut, Dünger und dergleichen zu beschicken, so dass durch Absperren einzelner Aufgabekanäle oder Verbindung der verschiedenen Aufgabekanäle mit verschiedenen Aufgabebehältnissen verschiedene Saatguttypen und Körnergrößen mit den dafür jeweils optimalen Dosierrädern ausgebracht werden können, vgl. EP 1 430 762 B1 und EP 1 430 761 B1. In den genannten beiden Schriften wird dabei vorgeschlagen, zwischen den verschiedenen Dosierrädern auf der Dosiererwelle stegförmig vorspringende Flansche vorzusehen, die ein Überströmen des auszubringenden Saatguts im Dosierergehäuse quer zur Umlaufrichtung von einem Dosierrad zum anderen Dosierrad verhindern sollen. Derartige Flansche auf der Dosiererwelle bringen jedoch diverse Probleme mit sich. Zum einen können sich bei der Lagerung der Dosiererwellen statische Überbestimmungen ergeben, da die genannten Wellenflansche am Dosierergehäuse passgenau zu positionieren sind, um tatsächlich ein Überlaufen auch kleinkörniger Stoffe zu verhindern. Zum anderen ist ein tatsächliches Verhindern des Überlaufens im Bereich einer die Dosierräder umgebenden Bodenklappe schwierig bzw. ohne besondere Gestaltung dieser Bodenklappe nicht möglich. Solche Bodenklappen, wie sie beispielsweise aus der DE 100 28 967 A1 bekannt sind, werden üblicherweise vorgesehen, um bei Überlastung den Förderkanalquerschnitt vergrößern und ein Einklemmen von Körnern verhindern zu können. Derartige Bodenklappen sind regelmäßig beweglich gelagert, so dass sie von den Dosierrädern wegfahren können. Hierdurch fahren die Bodenklappen jedoch auch von den Wellenflanschen weg, so dass zwischen den Wellenflanschen und der Bodenklappe ein Spalt entsteht, durch den Saatgut zu einem an sich nicht genutzten Dosierrad überlaufen kann. Die in der vorgenannten Druckschrift EP 1 430 762 B1 vorgesehene geschlitzte, lamellenförmige Ausbildung der Bodenklappe gestattet es zwar, die Wellenflansche sozusagen in den Schlitzen der Bodenklappe aufzunehmen, so dass die vorgenannte Spaltbildung nicht zwangsweise eintritt. Allerdings ist die lammellenförmige Ausbildung selbst nachteilig, da sie der Bodenklappe die Stabilität nimmt und überdies eine präzise Passung auch hinsichtlich der Einbaulage zwischen den Wellenflanschen und den Schlitzen in der Bodenklappe erfordert, da andernfalls entweder nicht die notwendige Dichtigkeit erreicht wird oder ein Klemmen, Schleifen und dergleichen zwischen Bodenklappe und Wellenflansch auftritt.

Hiervon ausgehend liegt der vorliegenden Erfindung die Aufgabe zugrunde, eine verbesserte Sämaschine der genannten Art zu schaffen, die Nachteile des Standes der Technik vermeidet und letzteren in vorteilhafter Weise weiterbildet. Vorzugsweise soll in kostengünstiger, einfach zu fertigender Weise ein Überlaufen von auch feinkörnigem Saatgut quer zur Umlaufrichtung der Dosierräder von einem Dosierrad zum nächsten Dosierrad effizient verhindert werden, ohne die Ausweichfunktion der Bodenklappe zu opfern.

Erfindungsgemäß wird diese Aufgabe durch eine Sämaschine gemäß Anspruch 1 gelöst. Bevorzugte Ausgestaltungen der Erfindung sind Gegenstand der abhängigen Ansprüche.

Es wird also vorgeschlagen, der Bodenklappe eine Gestalt zu geben, die unabhängig von der aktuellen Stellung der Bodenklappe, insbesondere auch wenn diese von den Dosierrädern ein wenig weggefahren ist, ein Überlaufen von Saatgut, Dünger und dergleichen von einem Dosierrad zu einem benachbarten Dosierrad hemmt. Erfindungsgemäß ist vorgesehen, dass die Bodenklappe eine sich in Umfangsrichtung der Dosierräder bzw. etwa parallel zu einer von der genannten Umfangsrichtung definierten Ebene erstreckende, zwischen zwei Dosierrädern angeordnete Überlaufbarriere aufweist, die die den Dosierrädern zugewandte Bodenklappenfläche in zwei Abschnitte unterteilt, die jeweils unterschiedlichen Dosierrädern zugeordnet sind. Durch diese Überlaufbarriere kann ein Saatgut- bzw. Düngerüberlauf quer zur Umfangsrichtung der Dosierräder verhindert bzw. weitgehend gehemmt werden. Insbesondere kann die Überlaufbarriere dabei in Form einer zu den Dosierrädern hin aufragenden Kante ausgebildet sein, um das unerwünschte Saatgutüberlaufen effizient zu verhindern und die den Dosierrädern zugeordneten Dosierraumabschnitte auch im Bereich der Bodenklappe voneinander abzugrenzen.

In Weiterbildung der Erfindung kann die Überlaufbarriere eine rechtwinklig von der Bodenklappenfläche aufragende Kante bilden, die zu den Dosierrädern hinragt. Denkbar wäre ggf. auch eine zur Bodenfläche leicht spitz- oder stumpfwinklig geneigte Anordnung. Eine rechtwinklig aufragende Überlaufbarriere ist jedoch ein guter Kompromiss hinsichtlich effizientem Zurückhalten von Saatgut einerseits und Vermeidung von sich dauerhaft sammelnden Saatgutrückständen andererseits.

Hinsichtlich der konkreten Gestaltung der Überlaufbarriere sind grundsätzlich verschiedene Ausbildungen möglich. Nach einer Ausführungsform der Erfindung kann die Überlaufbarriere einen Flächenabsatz umfassen und die den Dosierrädern zugewandte Bodenklappenfläche in einen höherliegenden und einen tieferliegenden Flächenabschnitt teilen. Eine derartige stufige Ausbildung der Bodenklappenfläche besitzt den Vorteil, dass bei Dosierrädern mit unterschiedlichem Durchmesser die den jeweiligen Dosierrädern zugeordneten Flächenabschnitte der Bodenklappenfläche im gewünschten, optimalen Abstand zur Umfangsfläche der jeweiligen Dosierräder angeordnet werden können, wobei vorteilhafterweise der tieferliegende Flächenabschnitt im Bereich eines Dosierrades mit größerem Durchmesser und der höherliegende Flächenabschnitt im Bereich eines Dosierrades mit kleinerem Durchmesser liegt. Zusätzlich kann durch die Stufe bzw. Kante zwischen den beiden Flächenabschnitten ein Überlaufen vom tieferliegenden Flächenabschnitt zum höherliegenden Flächenabschnitt effizient unterbunden werden. Umgekehrt kann ebenfalls ein unterwünschtes Überlaufen verhindert werden, insbesondere dann, wenn die Bodenklappe mit dem genannten Flächenabsatz unmittelbar an dem Dosierrad mit dem größeren Durchmesser ansteht bzw. ausreichend nahe an letzterem angeordnet ist, so dass der zwischen dem Dosierrad und dem höherliegenden Flächenabschnitt verbleibende Spalt so klein ist, dass kein Saatgut hindurchtreten kann.

Alternativ oder zusätzlich kann die Überlaufbarriere auch einen zu den Dosierrädern hin vorstehenden Steg aufweisen. Eine solche von der Bodenklappenfläche aufstehende Rippe verhindert effizient ein unerwünschtes Überströmen von Saatgut, Dünger oder dergleichen in beiden Richtungen.

Die Höhe der Überlaufbarriere kann grundsätzlich verschieden gewählt und an die Geometrie der Dosiervorrichtung und des Dosierergehäuses und der darin angeordneten Dosierräder angepasst sein. Nach einer vorteilhaften Ausführung der Erfindung kann vorgesehen sein, dass die Überlaufbarriere eine sich in Umfangsrichtung der Dosierräder verändernde Höhe besitzt. Insbesondere kann die Höhe zu einer Ablaufseite der Bodenklappe hin zunehmen, wobei nach einer vorteilhaften Ausführung der Erfindung eine stetige Zunahme der Höhe vorgesehen sein kann.

In Weiterbildung der Erfindung erstreckt sich die Überlaufbarriere im wesentlichen über die gesamte Länge der Bodenklappe in Umfangsrichtung der Dosierräder.

In Weiterbildung der Erfindung kann die Überlaufbarriere der Bodenklappe mit einer Trennwand zusammenwirken, die den Einlaufbereich der Dosiervorrichtung in verschiedene Zufuhrabschnitte unterteilt. Vorteilhafterweise können die Dosierräder über separate Zufuhrkanäle von einem Auslauf des Aufgabebehältnisses her getrennt voneinander beschickt werden, so dass es möglich ist, durch Sperren einzelner Zufuhrkanäle nur mit einer ausgewählten Unteranzahl der Dosierräder zu dosieren. Dies kann insbesondere dazu genutzt werden, für jeweiliges Saatgut nur die dafür bestimmten Dosierräder zu verwenden, während für anderes Saatgut ein anderer Satz von Dosierrädern verwendet wird.

Vorteilhafterweise kann die genannte Trennwand zwischen zwei Zufuhrkanälen mit der entsprechend positionierten Überlaufbarriere der zugehörigen Bodenklappe zumindest bereichsweise bündig abschließen und/oder in anderer Weise saatgutdicht verbunden sein, so dass die Überlaufbarriere sozusagen die Trennwirkung der Trennwand, die die Saatgutzufuhrbereiche verschiedener Dosierräder auseinanderhält, fortsetzt.

Insbesondere kann die Überlaufbarriere einen an die genannte Trennwand formangepassten Konturrand aufweisen, so dass der Konturrand der Überlaufbarriere und ein Konturrand der Trennwand einander komplementär ergänzen.

Vorteilhafterweise kann die Trennwand, die starr am Dosierergehäuse und/oder am Auslauf des Aufgabebehältnisses starr befestigt sein kann, die Überlaufbarriere und damit auch die Bodenklappe abstützen. In Weiterbildung der Erfindung weist die Trennwand Querführungsmittel zur Abstützung der Überlaufbarriere quer zur Umfangsrichtung der Dosierräder auf. Hierdurch können Belastungen der Bodenklappe und der daran vorgesehenen Überlaufbarriere in Folge des Saatgut- bzw. Düngerdrucks besser abgetragen werden.

In Weiterbildung der Erfindung können die Überlaufbarriere und die genannte Trennwand einander beispielsweise in Form einer Schwalbenschwanzpassung übergreifende Konturränder aufweisen. Alternativ können die Konturränder einander auch nur einseitig übergreifen dergestalt, dass sich ein Trennwandabschnitt auf einer Seite der Überlaufbarriere und umgekehrt ein Abschnitt der Überlaufbarriere auf einer gegenüberliegenden Seite der Trennwand erstreckt. Zusätzlich zur vorgenannten Abstützwirkung in Querrichtung kann durch eine solche übergreifende Ausbildung der Konturränder auch das Überlaufen unabhängig von Bewegungen der Bodenklappe von den Dosierrädern weg sichergestellt werden.

Vorteilhafterweise bilden die einander übergreifenden Konturränder eine verdickungsfreie Fortsetzung der Konturen der Überlaufbarriere und der Trennwand, so dass der Saatgutablauf nicht behindert wird. Hierzu kann zumindest eine der Konturen von Überlaufbarriere und Trennwand einen verdünnten Abschnitt besitzen. Insbesondere können die Überlaufbarriere und die Trennwand derart ausgebildet und angeordnet sein, dass sie gemeinsam einen plattenförmigen Trennsteg bilden, der sich zwischen dem jeweiligen Dosierradpaar erstreckt.

Die Bodenklappe ist in Weiterbildung der Erfindung beweglich gelagert, so dass sie von den Dosierrädern umfangsseitig wegbewegt werden kann. Insbesondere kann die Bodenklappe um eine Schwenkachse schwenkbar gelagert sein, die sich vorteilhafterweise parallel zu der Drehachse der Dosierräder erstreckt und insbesondere etwa im Bereich unterhalb des Auslaufs des Aufgabebehältnisses erstrecken kann.

Das vorgenannte Absperren der Saatgut- bzw. Düngerzufuhr zu einzelnen Dosierrädern bzw. einzelnen Dosierradgruppen kann vorteilhafterweise über Sperrelemente erreicht werden, die in Form von schwenkbaren Klappen oder vorzugsweise in Form von Schiebern ausgebildet und vorteilhafterweise im Bereich des Auslaufs des Aufgabebehältnisses angeordnet sein können.

Die Erfindung wird nachfolgend anhand bevorzugter Ausführungsbeispiele und zugehöriger Zeichnungen näher erläutert. In den Zeichnungen zeigen:
- Fig. 1:: eine schematische perspektivische Darstellung des Aufgabe- und Dosierbereichs einer im Übrigen nicht näher gezeigten Sämaschine,
- Fig. 2:: eine Draufsicht auf die Sämaschine aus Fig. 1 in deren Aufgabebehältnis hinein, die die im Auslaufbereich angeordneten Dosierräder zeigt,
- Fig. 3:: einen Längsschnitt durch das Aufgabebehältnis und die Dosiervorrichtung entlang der Linie A-A in Fig. 2,
- Fig. 4:: einen Längsschnitt durch die Dosiervorrichtung entlang der Linie C-C in Fig. 3, die das Überlappen der bodenklappenseitigen Überlaufbarriere und der gehäuseseitigen Trennwand zeigt,
- Fig. 5:: eine perspektivische Darstellung der Bodenklappe der Dosiervorrichtung aus den vorhergehenden Figuren,
- Fig. 6:: eine perspektivische Darstellung einer Bodenklappe der Dosiervorrichtung nach einer weiteren vorteilhaften Ausführung der Erfindung,
- Fig. 7:: einen Längsschnitt durch die Dosiervorrichtung ähnlich Fig. 3, die die Bodenklappe aus Fig. 6 zeigt,
- Fig. 8:: eine perspektivische Darstellung einer Bodenklappe der Dosiervorrichtung nach einer weiteren vorteilhaften Ausführung der Erfindung,
- Fig. 9:: einen Längsschnitt durch die Dosiervorrichtung ähnlich Fig. 3, die die Bodenklappe aus Fig. 8 zeigt,
- Fig. 10:: eine perspektivische Darstellung einer Bodenklappe der Dosiervorrichtung nach einer weiteren vorteilhaften Ausführung der Erfindung,
- Fig. 11:: einen Längsschnitt durch die Dosiervorrichtung ähnlich Fig. 3, die die Bodenklappe aus Fig. 10 zeigt,
- Fig. 12:: eine perspektivische Darstellung einer Bodenklappe der Dosiervorrichtung nach einer weiteren vorteilhaften Ausführung der Erfindung, und
- Fig. 13:: einen Längsschnitt durch die Dosiervorrichtung ähnlich Fig. 3, die die Bodenklappe aus Fig. 12 zeigt.

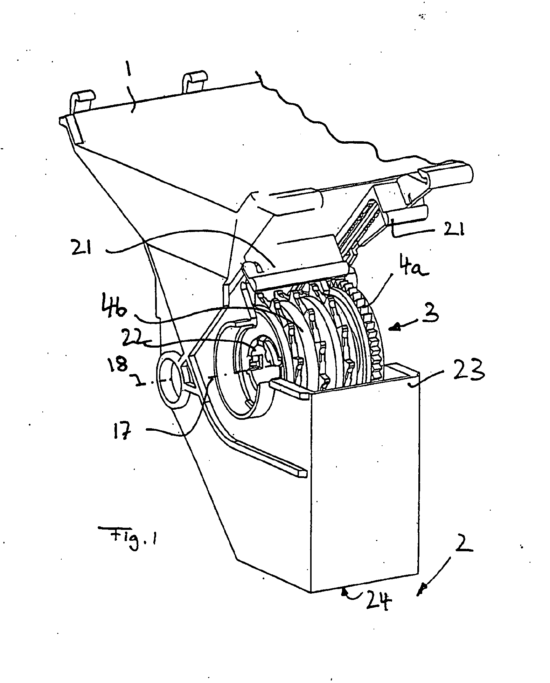

Die in Figur 1 nur ausschnittsweise dargestellte Sämaschine umfasst in an sich bekannter Weise ein trichterförmiges Aufgabebehältnis 1, dessen Auslauf 20 in eine Dosiervorrichtung 3 führt, die wiederum eine Ausbringvorrichtung 2 speist, mittels derer Saatgutkörner bzw. Dünger in dem bzw. auf dem Erdboden in Reihen abgelegt wird.

Wie Figur 1 zeigt, umfasst die Dosiervorrichtung eine liegend angeordnete, sich zur Fahrtrichtung vorteilhafterweise quer erstreckende Dosiererwelle 22, auf der nebeneinander mehrere Dosierräder 4 angeordnet sind. Die Dosiererwelle 22 ist dabei vorteilhafterweise in Abhängigkeit der Fahrgeschwindigkeit antreibbar, um den gewünschten Saatgutaustrag pro Flächeneinheit zu erzielen.

Wie Figur 1 zeigt, sind auf der Dosiererwelle 22 vorteilhafterweise verschieden ausgebildete Dosierräder 4a und 4b vorgesehen, die insbesondere für unterschiedliche Körnergrößen bestimmt sind und an ihrer Umfangsfläche unterschiedlich strukturiert sind, ggf. auch einen unterschiedlichen Durchmesser aufweisen können. In der gezeichneten Ausführung ist dabei ein Dosierrad 4a für kleinere Körner und ein dreireihiges Dosierrad 4b für größere Körner vorgesehen. Es versteht sich jedoch, dass mehrere Sätze solcher unterschiedlichen Dosierräder nebeneinander angeordnet sein können bzw. Figur 1 nur einen Ausschnitt der Sämaschine zeigt und auch andere Kombinationen als die dreigliedrigen Dosierräder 4a vorgesehen sein können und auch mehr als zwei Typen von Dosierrädern vorgesehen sein können.

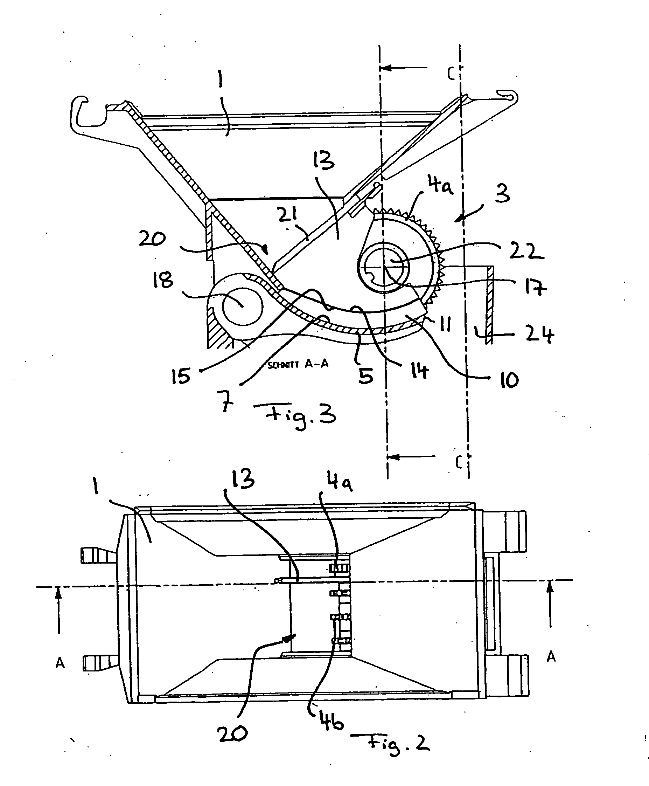

Wie Figur 3 zeigt, ist die Dosiervorrichtung 3 dabei in einem Auslaufbereich des Aufgabebehältnisses 1 angeordnet bzw. diesem unmittelbar nachgeschaltet. Ein Dosierergehäuse 23 schließt unmittelbar an das Aufgabebehältnis 1 an und kommuniziert mit dem Auslauf 20 des Aufgabebehältnisses 1.

Wie die Figuren 2, 3 und 4 zeigen, ist der Auslaufbereich des Aufgabebehältnisses 1 durch eine Trennwand 13, die sich parallel zur Umfangsrichtung der Dosierräder 4 erstreckt, in verschiedene Auslaufbereiche unterteilt, die separat zu den verschiedenen Dosierrädern 4a einerseits und 4b andererseits führen. Durch die Trennwand 13 werden im Auslauf 20 sowie im Inneren des Dosierergehäuses 23 separate Zufuhrkanäle 12 zu den verschiedenen Dosierrädern 4 gebildet, so dass die Dosierräder 4 separat aus dem Aufgabebehältnis 1 gespeist werden können. Wie Figur und 3 zeigen, sind dabei im Bereich des Auslaufs 20 Sperrelemente 21 in Form von Schiebern vorgesehen, mit Hilfe derer die vorgenannten Auslaufbereiche unabhängig voneinander wahlweise gesperrt oder freigegeben werden können, so dass das Saatgut aus dem Aufgabebehältnis 1 wahlweise auf alle Dosierräder 4, wahlweise auf nur das Dosierrad 4a oder wahlweise nur auf das Dosierrad 4b läuft, wobei entsprechend dem vorstehend Gesagten vorgesehen sein kann, dass bei mehreren Gruppen von Dosierrädern diese Auswahlmöglichkeit auch gruppenweise gegeben sein kann, so dass beispielsweise alle Dosierräder für feines Korn beschickt werden, während alle Dosierräder für größere Körner gesperrt werden oder umgekehrt. Wie Figur 3 zeigt, können die schieberartigen Sperrelemente 21 vorteilhafterweise entlang einer der Wandungen des trichterförmigen Aufgabebehältnisses 1 über dessen Auslauf gefahren werden, so dass der entsprechende Zufuhrkanal 12 gesperrt ist.

Wie Figur 3 zeigt, erstreckt sich die vorgenannte Trennwand von der Einschubebene des Sperrelements 21 weg in das Dosierergehäuse 23 hinein und schmiegt sich bereichsweise um die Dosiererwelle 22, und zwar im Bereich zwischen zwei voneinander abzutrennenden Dosierrädern 4a und 4b. In der gezeichneten Ausführungsform deckt dabei die Trennwand 13 etwa den halben Umfang der benachbarten Dosierräder 4a und 4b voneinander ab, und zwar vorteilhafterweise den dem Auslauf 20 zugewandten Umfangsabschnitt.

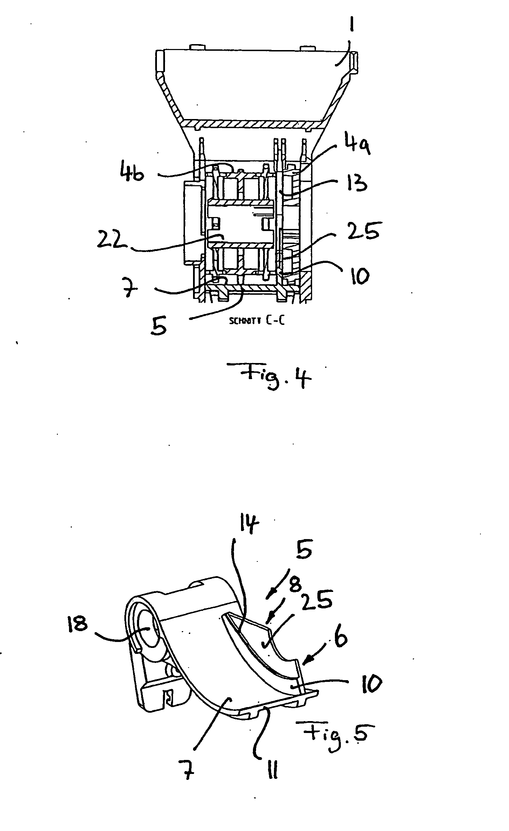

Im Bodenbereich des Dosierergehäuses 23 ist eine Bodenklappe 5 vorgesehen, die - grob gesprochen - in Form einer gebogenen Platte ausgebildet ist und sich - wiederum grob gesprochen - tangential bereichsweise um die Dosierräder 4a und 4b schmiegt, vgl. Figur 3 und Figur 5. Die genannte Bodenklappe 5 ist dabei um eine Schwenkachse 18 schwenkbar aufgehängt, so dass die Bodenklappe 5 von den Dosierrädern 4 wegbewegt und auf diese zu bewegt werden kann. Die genannte Schwenkachse 18 ist in der gezeichneten Ausführungsform unterhalb des Auslaufs 20 angeordnet und erstreckt sich parallel zu der Dosiererachse 17, um die die Dosierräder 4 rotieren. Die Bodenklappe 5 führt vom Auslauf 20 des Aufgabebehältnisses 1 in Form einer gebogenen Rutsche bis unter die Dosierräder 4. Die Ablaufseite 11 der Bodenklappe 5 reicht über den tiefsten Punkt der Dosierräder 4 hinaus, vgl. Figur 3, und liegt im Bereich eines Ablaufkanals 24 der Dosiervorrichtung 3.

Wie die Figuren 3, 4 und insbesondere 5 zeigen, ist die Bodenklappe 5 mit einer Überlaufbarriere 6 versehen, die sich in der gezeichneten Ausführung in Form eines rippenförmiges Steges 10 bzw. einer Scheidewand von der den Dosierrädern 4 zugewandten Bodenklappenfläche 7 erhebt. In der gezeichneten Ausführung ist dabei der Steg 10 bzw. die Scheidewand, die die Überlaufbarriere 6 bildet, senkrecht zur Bodenklappenfläche 7 ausgerichtet, wobei sich die Überlaufbarriere 6 in Umfangsrichtung der Dosierräder und senkrecht zur Schwenkachse 18 der Bodenklappe 5 erstreckt.

Die Überlaufbarriere 6 ist dabei zwischen den voneinander zu trennenden Dosierrädern 4a und 4b angeordnet, wobei vorteilhafterweise die Überlaufbarriere 6 mit der zuvor beschriebenen Trennwand 13 zusammenwirkt. In der in Figur 5 gezeichneten Ausführung umfasst die Überlaufbarriere 6 einen Überlappungsbereich 25 mit verringerter Wandstärke, der sich seitlich neben die Trennwand 13 schiebt, die ebenfalls einen am Rand vorgesehenen Überlappungsbereich mit verringerter Wandstärke aufweisen kann, vgl. Figur 4. Dabei sind die Randkonturen der Überlaufbarriere 6 sowie der Trennwand 13 vorteilhafterweise komplementär aneinander angepasst, so dass sich insgesamt ein bündiger Abschluss zwischen den Konturen ergibt, vgl. Figur 3 und Figur 4.

Damit ergibt sich folgende Funktion: Wird beispielsweise durch entsprechende Stellung der Sperrelemente 21 Saatgut aus dem Aufgabebehältnis 1 ausschließlich auf das Dosierrad 4a gegeben, während das Dosierrad 4b vom Saatgutzulauf abgesperrt ist, wird das Saatgut lediglich durch das Dosierrad 4a in die Ausbringvorrichtung 2 gefördert. Dabei verhindert die Überlaufbarriere 6 der Bodenklappe 5 auch im Bereich der genannten Bodenklappe ein Überströmen des Saatguts quer zur Umfangsrichtung der Dosierräder 4, so dass auch im Bereich der Bodenklappe 5 kein Saatgut in den Bereich der abgesperrten Dosierräder 4b gelangen kann. Vorteilhafterweise stellt der Überlappungsbereich 25 dies auch dann sicher, wenn die Bodenklappe 5 um die Schwenkachse 18 ein Stück weit wegschwenkt, da die einander überlappende Anordnung von Trennwand 13 und Überlaufbarriere 6 die Trennung zwischen den Ablaufbereichen sicherstellt.

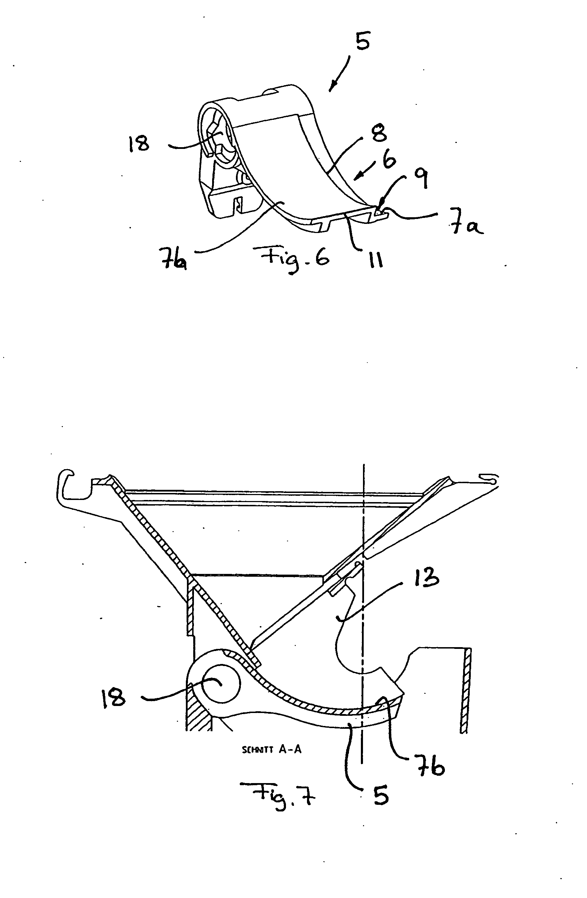

Weitere mögliche Varianten der Bodenklappe 5 und der daran vorgesehenen Überlaufbarriere zeigen die Figuren 6 bis 13. Gemäß Figur 6 kann die Überlaufbarriere 6 in Form eines Flächenabsatzes 9 ausgebildet sein, der die Bodenklappenfläche 7 in einen tieferliegenden Bereich 7a und einen höherliegenden Bereich 7b unterteilt, wobei vorteilhafterweise der Flächenabsatz 9 exakt zwischen den voneinander zu trennenden Dosierrädern 4a und 4b vorgesehen ist, so dass der höherliegende Flächenabschnitt der Bodenklappenfläche 7 bündig an eine Stirnseite des Dosierrades 4a anschließt und/oder bündig mit der Randkontur der Trennwand 13 abschließt, vgl. Figur 7.

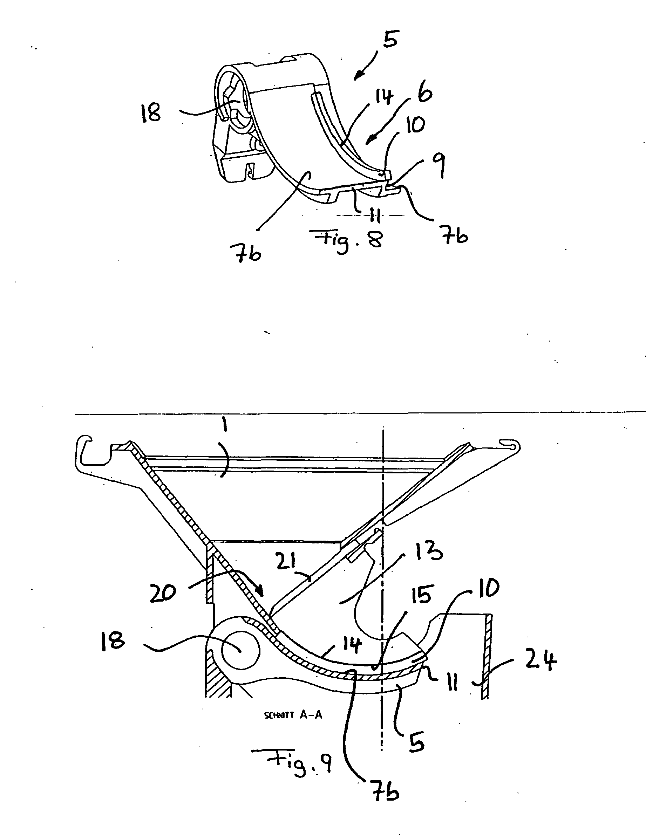

Um die Trennwirkung zu erhöhen, kann im Bereich des Flächenabsatzes 9 zusätzlich ein zu den Dosierrädern 4 hin vorspringender Steg 10 vorgesehen sein, der zusammen mit dem vorgenannten Flächenabsatz 9 die Überlaufbarriere 6 bildet, vgl. Figur 8 und 9.

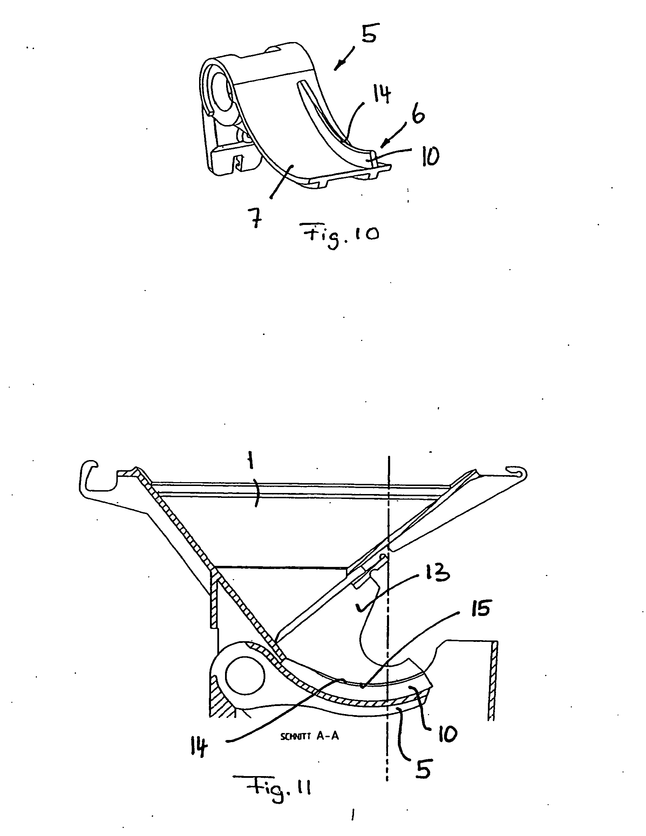

Gemäß Figur 10 und 11 kann die Überlaufbarriere 6 auch in Form einer einfachen Rippe bzw. eines Stegs 10 bestehen, der die Scheidewand bildet. Vorteilhafterweise kann hierbei zwischen der Randkontur der Überlaufbarriere 6 und der Trennwand 13 eine schwalbenschwanzförmige Überlappung vorgesehen sein. In der gezeichneten Ausführung umfasst die der Trennwand 13 zugewandte Kante der Überlaufbarriere 6 eine konische Verjüngung, vgl. Figur 10, während andererseits die Trennwand 13 an ihrer Randkontur eine rinnenförmige Vertiefung aufweist, die die genannte konische Verjüngung des Trennstegs 10 übergreift, vgl. Figur 11.

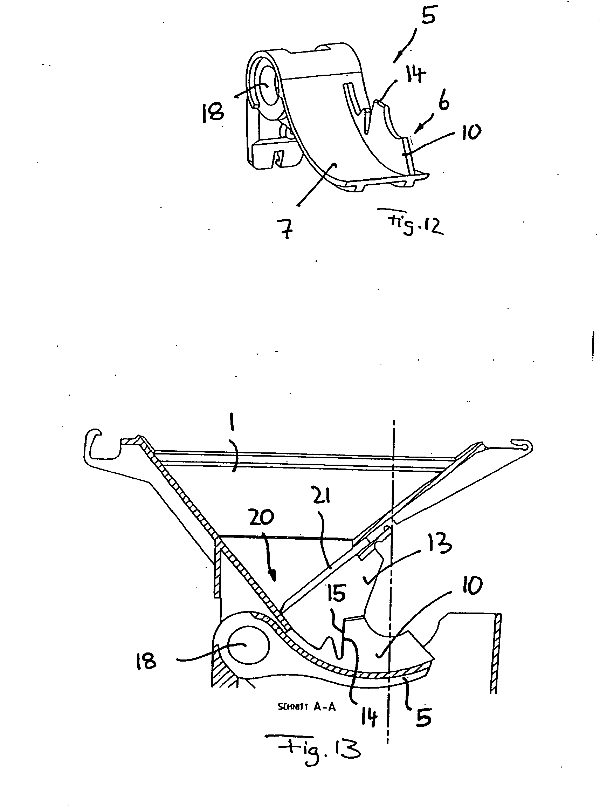

Gemäß Figur 12 kann auch in Längsrichtung des Trennstegs 10 ein Ineinandergreifen zwischen Trennwand 13 und Steg 10 erfolgen. Auch hier sind die Konturen der Überlaufbarriere 6 und der Trennwand 13 komplementär aneinander angepasst, vgl. Figur 13.

## Patentansprüche

1. Sämaschine zum Ausbringen von Saatgut, Dünger und dergleichen, mit einem Aufgabebehältnis (1), einer Ausbringvorrichtung (2) sowie einer zwischen dem Aufgabebehältnis (1) und der Ausbringvorrichtung (2) vorgesehenen Dosiervorrichtung (3), die mehrere nebeneinander angeordnete Dosierräder (4) aufweist, die aus dem Aufgabebehältnis (1) mit dem Saatgut, Dünger und dergleichen beschickbar sind, wobei die Dosierräder (4) umfangsseitig bereichsweise von zumindest einer Bodenklappe (5) umgeben sind, die zumindest zwei nebeneinander angeordneten Dosierrädern (4a, 4b) zugeordnet ist, **dadurch gekennzeichnet, dass** die Bodenklappe (5) eine sich in und/oder parallel zur Umfangsrichtung der Dosierräder (4) erstreckende, zwischen zwei Dosierrädern (4a, 4b) angeordnete Überlaufbarriere (6) aufweist, die die den Dosierrädern (4) zugeordnete Bodenklappenfläche (7) in zwei Abschnitte (7a, 7b) unterteilt, die jeweils unterschiedlichen Dosierrädern (4a, 4b) zugeordnet sind.

2. Sämaschine nach dem vorhergehenden Anspruch, wobei die Überlaufbarriere (6) eine zu den Dosierrädern (4) hin aufragende, vorzugsweise rechtwinklig zur Bodenklappenfläche (7) stehende, Kante (8) aufweist.

3. Sämaschine nach einem der vorhergehenden Ansprüche, wobei die Überlaufbarriere (6) einen Flächenabsatz (9) umfasst und die Bodenklappenfläche (7) in einen höherliegenden und einen tieferliegenden Flächenabschnitt (7a, 7b) teilt.

4. Sämaschine nach einem der vorhergehenden Ansprüche, wobei die Überlaufbarriere (6) einen zu den Dosierrädern (4) hin vorstehenden, vorzugsweise rippenförmigen, Steg aufweist.

5. Sämaschine nach einem der vorhergehenden Ansprüche, wobei die Überlaufbarriere (6) eine sich in Umfangsrichtung der Dosierräder (4) verändernde Höhe besitzt.

6. Sämaschine nach dem vorhergehenden Anspruch, wobei die Höhe zu einer Ablaufseite (11) der Bodenklappe (5) hin vorzugsweise stetig zunimmt.

7. Sämaschine nach einem der vorhergehenden Ansprüche, wobei sich die Überlaufbarriere (6) im wesentlichen über die gesamte Länge der Bodenklappe (5) erstreckt.

8. Sämaschine nach einem der vorhergehenden Ansprüche, wobei die Dosierräder (4) von dem Aufgabebehältnis (1) her über getrennte Zuführkanäle (12) beschickbar sind, die durch zumindest eine Trennwand (13) voneinander getrennt sind, die sich zwischen den beiden vorgenannten nebeneinander liegenden Dosierrädern (4a, 4b) erstreckt, und zumindest bereichsweise bündig und/oder saatgutdicht mit der Überlaufbarriere (6) abschließt.

9. Sämaschine nach dem vorhergehenden Anspruch, wobei die Überlaufbarriere (6) einen an die genannte Trennwand (13) formangepassten Konturrand aufweist und/oder ein Konturrand (14) der Überlaufbarriere (6) und ein Konturrand (15) der Trennwand (13) einander komplementär ergänzen.

10. Sämaschine nach einem der beiden vorhergehenden Ansprüche, wobei die Trennwand (13) Querführungsmittel (16) zur Abstützung der Überlaufbarriere (6) quer zur Umfangsrichtung der Dosierräder (4) aufweist.

11. Sämaschine nach dem vorhergehenden Anspruch, wobei die Überlaufbarriere (6) und die Trennwand (13) einander übergreifende Konturwände (14, 15) aufweisen.

12. Sämaschine nach dem vorhergehenden Anspruch, wobei die einander übergreifenden Konturwände (14, 15) eine Schwalbenschwanzpassung bilden.

13. Sämaschine nach einem der beiden vorhergehenden Ansprüche, wobei die einander übergreifenden Konturwände (14, 15) eine verdickungsfreie Fortsetzung der Konturen der Überlaufbarriere (6) und der Trennwand (13) bilden und/oder zumindest eine der Konturen im Bereich des Übergriffs eine verdünnte Wandstärke besitzt.

14. Sämaschine nach einem der vorhergehenden Ansprüche, wobei die Überlaufbarriere (6) und die Trennwand (13) derart ausgebildet und angeordnet sind, dass sie gemeinsam einen zwischen den Dosierrädern (4) angeordneten plattenförmigen Trennsteg bilden.

15. Sämaschine nach einem der vorhergehenden Ansprüche, wobei die Bodenklappe (5) um eine zu einer Dosierraddrehachse (17) parallele Schwenkachse (18), die vorzugsweise unter einem Auslauf (20) des Aufgabebehältnisses (1) angeordnet ist, schwenkbar gelagert ist.

16. Sämaschine nach einem der vorhergehenden Ansprüche, wobei zumindest zwei nebeneinander angeordnete Dosierräder (4a, 4b) im Bereich der Bodenklappe (5) voneinander unterschiedlich ausgebildet sind und zum Ausbringen verschiedener Korngrößen vorgesehen sind.

17. Sämaschine nach dem vorhergehenden Anspruch, wobei die Dosierräder (4a, 4b) einen unterschiedlichen Durchmesser besitzen.

18. Sämaschine nach einem der vorhergehenden Ansprüche, wobei den Dosierrädern (4) Sperrelemente (21) zum Absperren der Saatgut- und/oder Düngerzufuhr zu den Dosierrädern (4) vorgeschaltet sind.

19. Sämaschine nach dem vorhergehenden Anspruch, wobei die Sperrelemente (21) jeweils einzelnen Dosierrädern oder einzelnen Dosierradgruppen zugeordnet und unabhängig voneinander betätigbar sind derart, dass die Saatgut- und/oder Düngerzufuhr wahlweise für einzelne Dosierräder oder einzelne Dosierradgruppen freigebbar und für einzelne Dosierräder oder einzelne Dosierradgruppen sperrbar ist.

20. Sämaschine nach einem der beiden vorhergehenden Ansprüche, wobei die Sperrelemente (21) im Bereich eines Auslaufs (20) des Aufgabebehältnisses (1) angeordnet sind.

21. Sämaschine nach dem vorhergehenden Anspruch, wobei die Sperrelemente (21) in Form von Schiebern ausgebildet sind.

## Claims

1. A seeder for dispersing seeds, fertiliser and the like, having a filling container (1), a dispersing apparatus (2) and a metering apparatus (3) which is provided between the filling container (1) and the dispersing apparatus (2) and which has a plurality of metering wheels (4) which are arranged next to one another and which can be charged from the filling container (1) with the seeds, fertiliser and the like, wherein the metering wheels (4) are regionally surrounded at the peripheral side by at least one base flap (5) which is associated with at least two metering wheels (4a, 4b) arranged next to one another, **characterised in that** the base flap (5) has an overflow barrier (6) extending in and/or in parallel to the peripheral direction of the metering wheels (4), arranged between two metering wheels (4a, 4b) and dividing the base flap surface (7) associated with the metering wheels (4) into two sections (7a, 7b) which are each associated with respective different metering wheels (4a, 4b).

2. A seeder in accordance with the preceding claim, wherein the overflow barrier (6) has an edge (8) projecting up towards the metering wheels (4) and preferably standing at a right angle to the base flap surface (7).

3. A seeder in accordance with one of the preceding claims, wherein the overflow barrier (6) includes a surface step (9) and divides the base flap surface (7) into a higher and a lower surface section (7a, 7b).

4. A seeder in accordance with one of the preceding claims, wherein the overflow barrier (6) has a web projecting towards the metering wheels (4) and preferably being of rib shape.

5. A seeder in accordance with one of the preceding claims, wherein the overflow barrier (6) has a height varying in the peripheral direction of the metering wheels (4).

6. A seeder in accordance with one of the preceding claims, wherein the height of an outflow side (11) of the base flap (5) increases, preferably constantly.

7. A seeder in accordance with one of the preceding claims, wherein the overflow barrier (6) extends substantially over the total length of the base flap (5).

8. A seeder in accordance with one of the preceding claims, wherein the metering wheels (4) can be charged from the filling container (1) via separate feed channels (12) which are separated from one another by at least one dividing wall (13) which extends between the two aforesaid metering wheels (4a, 4b) disposed next to one another and which terminates flush and/or seed-tight with the overflow barrier (6) at least regionally.

9. A seeder in accordance with the preceding claim, wherein the overflow barrier (6) has a contour edge shape-matched to the named dividing wall (13) and/or wherein a contour margin (14) of the overflow barrier (6) and a contour margin (15) of the dividing wall (13) supplement one another in a complementary manner.

10. A seeder in accordance with one of the two preceding claims, wherein the dividing wall (13) has transverse guidance means (16) for supporting the overflow barrier (6) transversely to the peripheral direction of the metering wheels (4).

11. A seeder in accordance with the preceding claim, wherein the overflow barrier (6) and the dividing wall (13) have contour walls (14, 15) engaging above one another.

12. A seeder in accordance with the preceding claim, wherein the contour walls (14, 15) engaging over one another form a dovetail fit.

13. A seeder in accordance with one of the two preceding claims, wherein the contour walls (14, 15) engaging over one another form a continuation of the contours of the overflow barrier (6) and of the dividing wall (13) free of any thickened portion and/or wherein at least one of the contours has a thinned wall thickness at least in the region of the over-engagement.

14. A seeder in accordance with one of the preceding claims, wherein the overflow barrier (6) and the dividing wall (13) are designed and arranged such that they together form a plate-shaped dividing web between the metering wheels (4).

15. A seeder in accordance with one of the preceding claims, wherein the base flap (5) is pivotably supported about a pivot axis (18) which is parallel to a metering wheel axis of rotation (17) and is preferably arranged beneath an outflow (20) of the filling container (1).

16. A seeder in accordance with one of the preceding claims, wherein at least two metering wheels (4a, 4b) arranged next to one another are designed differently from one another in the region of the base flap (5) and are provided for dispersing different grain sizes.

17. A seeder in accordance with the preceding claim, wherein the metering wheels (4a, 4b) have different diameters.

18. A seeder in accordance with one of the preceding claims, wherein blocking elements (21) for blocking the seed feed and/or fertiliser feed to the metering wheels (4) are interposed before the metering wheels (4).

19. A seeder in accordance with one of the preceding claims, wherein the blocking elements (21) are each associated with individual metering wheels or individual metering wheel groups and can be actuated independently of one another such that the seed feed and/or fertiliser feed can be selectively released for individual metering wheels or individual metering wheel groups and blocked for individual metering wheels or individual metering wheel groups.

20. A seeder in accordance with one of the two preceding claims, wherein the blocking elements (21) are arranged in the region of an outflow (20) of the filling container (1).

21. A seeder in accordance with the preceding claim, wherein the blocking elements (21) are designed in the form of sliders.

## Revendications

1. Semoir pour l'épandage de semences, d'engrais et autres, avec un récipient de distribution (1), un dispositif d'épandage (2) ainsi qu'un dispositif de dosage (3) situé entre le récipient de distribution (1) et le dispositif d'épandage (2), comprenant plusieurs roues de dosage (4) pouvant être alimentées en semences, en engrais et autres à partir du récipient de distribution (1), les roues de dosage (4) étant entourées partiellement, au niveau de leur circonférence, par au moins un clapet de fond (5) correspondant à au moins deux roues de dosage (4a, 4b) disposées l'une à côté de l'autre, **caractérisé en ce que** le clapet de fond (5) comprend une barrière de trop-plein (6) s'étendant dans la direction et/ou parallèlement à la direction circonférentielle des roues de dosage (4) et disposée entre deux roues de dosage (4a, 4b), qui divise la surface du clapet de fond (7) orientée vers les roues de dosage (4) en deux parties (7a, 7b) correspondant respectivement à des roues de dosage différentes (4a, 4b).

2. Semoir selon la revendication précédente, moyennant quoi la barrière de trop-plein (6) comprend une arête (8) dressée en direction des roues de dosage (4), de préférence perpendiculairement à la surface du clapet de fond (7).

3. Semoir selon l'une des revendications précédentes, moyennant quoi la barrière de trop-plein (6) comprend un épaulement (9) et divise la surface du clapet de fond (7) en une partie haute et une partie basse (7a, 7b).

4. Semoir selon l'une des revendications précédentes, moyennant quoi la barrière de trop-plein (6) comprend une nervure dépassant en direction des roues de dosage (4) et présentant de préférence la forme d'une membrure.

5. Semoir selon l'une des revendications précédentes, moyennant quoi la barrière de trop-plein (6) comprend une hauteur variable dans la direction circonférentielle des roues de dosage (4).

6. Semoir selon l'une des revendications précédentes, moyennant quoi la hauteur augmente de préférence de manière constante en direction d'un côté d'évacuation (11) du clapet de fond (5).

7. Semoir selon l'une des revendications précédentes, moyennant quoi la barrière de trop-plein (6) s'étend principalement sur toute la longueur du clapet de fond (5).

8. Semoir selon l'une des revendications précédentes, moyennant quoi les roues de dosage (4) peuvent être alimentées à partir du récipient de distribution (1) par l'intermédiaire de canaux d'alimentation (12) séparés les uns des autres par une cloison (13), qui s'étend entre les deux roues de dosage (4a, 4b) situées l'une à côté de l'autre, mentionnées ci-dessus, et se termine au moins partiellement en affleurement et/ou de manière étanche aux semences avec la barrière de trop-plein (6).

9. Semoir selon la revendication précédente, moyennant quoi la barrière de trop-plein (6) comprend un bord adapté à la forme de la cloison (13) et/ou un bord (14) de la barrière de trop-plein (6) et un bord (15) de la cloison (13) se complètent mutuellement.

10. Semoir selon l'une des deux revendications précédentes, moyennant quoi la cloison (13) comprend des moyens de guidage transversaux (16) permettant de soutenir la barrière de trop-plein (6) transversalement par rapport à la direction circonférentielle des roues de dosage (4).

11. Semoir selon la revendication précédente, moyennant quoi la barrière de trop-plein (6) et la cloison (13) présentent des parois (14, 15) qui se chevauchent.

12. Semoir selon la revendication précédente, moyennant quoi les parois (14, 15) qui se chevauchent forment un ajustement en queue d'aronde.

13. Semoir selon l'une des deux revendications précédentes, moyennant quoi les parois (14, 15) qui se chevauchent forment un prolongement sans épaississement des contours de la barrière de trop-plein (6) et de la cloison (13) et/ou au moins un des contours présente une épaisseur de paroi réduite au niveau du chevauchement.

14. Semoir selon l'une des revendications précédentes, moyennant quoi la barrière de trop-plein (6) et la cloison (13) sont conçues et disposées de telle sorte qu'elles constituent ensemble une nervure de séparation plane disposée entre les roues de dosage (4).

15. Semoir selon l'une des revendications précédentes, moyennant quoi le clapet de fond (5) est logé de manière pivotante autour d'un axe de pivotement (18) qui est parallèle à un axe de rotation des roues de dosage (17) et qui se trouve de préférence sous une sortie (20) du récipient de distribution (1).

16. Semoir selon l'une des revendications précédentes, moyennant quoi au moins deux roues de dosage (4a, 4b) disposées l'une à côté de l'autre au niveau du clapet de fond (5) sont conçues de manière différente et sont prévues pour l'épandage de différentes tailles de grains.

17. Semoir selon la revendication précédente, moyennant quoi les roues de dosage (4a, 4b) présentent des diamètres différents.

18. Semoir selon l'une des revendications précédentes, moyennant quoi des éléments de blocage (21) sont situés en amont des roues de dosage (4) afin de bloquer l'alimentation en semences et/ou en engrais des roues de dosage (4).

19. Semoir selon la revendication précédente, moyennant quoi les éléments de blocage (21) correspondent à certaines roues de dosage ou à certains groupes de roues de dosage et peuvent être actionnés indépendamment les uns des autres de façon à ce que l'alimentation en semences et/ou en engrais puisse être débloquée de manière sélective pour certaines roues de dosage ou pour certains groupes de roues de dosage et bloquée pour certaines roues de dosage ou pour certains groupes de roues de dosage.

20. Semoir selon l'une des deux revendications précédentes, moyennant quoi les éléments de blocage (21) sont disposés au niveau d'une sortie (20) du récipient de distribution (1).

21. Semoir selon l'une des revendications précédentes, moyennant quoi les éléments de blocage (21) se présentent sous la forme de coulisseaux.
